## Europäisches Patentamt
## European Patent Office
## Office européen des brevets

(11) Publication number: **0 013 299**
**B1**

# EUROPEAN PATENT SPECIFICATION

(45) Date of publication of patent specification: **02.11.83**

(21) Application number: **79104059.5**

(22) Date of filing: **19.10.79**

(51) Int. Cl.³: **B 01 D 47/00, F 23 J 15/00
//B01D47/06, B01D53/34**

(54) **Method and apparatus for treating flue gases.**

(30) Priority: **20.12.78 US 971175**

(43) Date of publication of application:
**23.07.80 Bulletin 80/15**

(45) Publication of the grant of the patent:
**02.11.83 Bulletin 83/44**

(84) Designated Contracting States:
**DE NL SE**

(56) References cited:
**DE - A - 1 671 393
DE - A - 2 050 410
DE - A - 2 405 669
DE - A - 2 534 616
DE - C - 424 199
DE - C - 746 815
DE - C - 962 783
US - A - 2 200 891
US - A - 2 207 576
US - A - 2 858 903
US - A - 3 730 499
US - A - 3 775 948**

(73) Proprietor: **COMBUSTION ENGINEERING, INC.
1000 Prospect Hill Road
Windsor Connecticut 06095 (US)**

(72) Inventor: **Rader, Philip Charles
86 Juniper Drive
Windsor Locks Connecticut 06096 (US)**

(74) Representative: **Gross, Gernot K.
Kleiberweg 5
D-6200 Wiesbaden (DE)**

Courier Press, Leamington Spa, England.

## Method and apparatus for treating flue gases

Background of the invention

This invention relates to the field of pollution abatement, and more particularly to a method and apparatus for treating flue gases to effect the removal of pollutants therefrom prior to the exhaustion of the flue gas to the atmosphere. It has long been known in the prior art that flue gases are carriers of pollutants. Moreover, it has long been known that the pollutants carried by the flue gases and being exhausted therewith to the atmosphere can prove to be harmful to humans as well as result in damage being done to property. However, it is only relatively recently that the matter of pollution abatement has risen to a level wherein it is viewed as being a subject worthy of serious national concern. This status, which has been achieved thereby, is principally attributable to the fact that the federal government as well as state and local governments have been issuing air-emission standards, and the operators of pollution-producing equipment are now being faced with the necessity of complying with such standards, or else incurring relatively severe penalties for failing to do so. Prior to the establishment of these newly adopted standards, the practice, which had enjoyed relatively widespread acceptance heretofore, had been one of exhausting to the atmosphere flue gases, while still in a relatively untreated state.

Two of the most undesirable constituents that are to be found contained in the flue gas and to which attention has been directed heretodate in an effort to rid the flue gas thereof are sulfur dioxide and particulate matter. One of the reasons why the inclusion of sulfur dioxide in the flue gas is viewed as being undesirable is because a characteristic of sulfur is that it readily combines with water vapor and oxygen to form sulfuric acid, which is known to be capable of posing a hazard to humans as well as being known to have a damage-inducing effect on the environment. Particulate matter, on the other hand, is unwanted both for health and aesthetic reasons. Namely, when particulate matter is allowed to be discharged into the atmosphere, it normally tends to fall to the ground producing a thin layer thereof that effectively covers everything with which it comes in contact. Although such a layer of particulate matter normally does not pose a serious threat to human health per se, it is unsightly and does commonly occasion the necessity of effecting the more frequent repainting, cleaning, etc. of the exterior of building structures, etc. that have become covered with a layer of such particulate matter.

The prior art contains a multiplicity of teachings of a variety of different types of devices that have been designed to be operative to effect the removal of contaminants from flue gases. One such type of device is that known as a marble bed. As the name implies, a marble bed comprises a multiplicity of marbles that are suitably arranged in a layer-type configuration so as to form a bed thereof. The flue gas is made to pass therethrough, during the course of which the flue gas is subjected to a scrubbing action. The prior art has utilized the marble bed form of scrubber, which is classifiable in the art as a wet scrubber, as a means of removing sulfur compounds from flue gases. By way of illustration, reference may be had to U.S. Patent No. 3,687,613—Rickard for a teaching of the mode of operation and the nature of the construction of a prior art system for effecting the treatment of flue gases in which such a marble bed is employed. As set forth in the aforesaid Rickard patent, for best results an additive which has an affinity for sulfur oxides and which is capable of forming a slurry when mixed with water is employed in conjunction with the marble bed to promote the desired scrubbing action of the flue gas as the latter passes through the marble bed. One major disadvantage, however, of the marble bed type of scrubber is that it has exhibited a susceptibility to becoming clogged with slurry, whereupon the marble bed loses its effectiveness as a flue gas treatment device.

A further example of a prior art teaching is to be found in DE—C—962783. In accord therewith a system is disclosed which includes first and second spray tower means and demister means. However, DE—C—962783 fails to evidence any recognition as to the desirability of providing an apparatus and a method for treating a flue gas which are predicated on combining a spray tower in series relation with a rod scrubber and a demister means such that the spray tower is located upstream of both of the latter whereby the flue gas is first treated for the removal of sulfur compounds, followed by treatment to remove particulate matter from the flue gas and to effect the separation of fine water droplets thereafter.

Another type of device, which has been employed in the prior art to effect the removal of sulfur compounds from flue gases, is that commonly referred to as a spray tower. As known in the prior art and as may be implied from its name, a spray tower comprises a tower in the form of a section of conduit, i.e., ductwork, through which flue gas is made to flow. During the course of its passage through the spray tower, a spraying of the flue gas takes place. The effect of the spraying of the flue gas is to produce a washing of the particle-laden flue gas to free the latter from material, particularly in the nature of sulfur compounds, that may be entrained therein. Commonly, the spray is in the form of water-based slurry which contains an additive that has a known affinity for sulfur oxides. The nozzles through which the spray is discharged are normally suitably mounted in the tower so that the discharge of the spray is counter to the flow of the flue gas therethrough. Generally speaking, the mode of operation of the spray tower is such that the sulfur oxides contained in the flue gas combine with the slurry as the flue gas flows through the spray tower. Moreover, the velocity of the gas stream of the flue gas as it flows through the spray tower is selected to be such that it is no longer sufficient to maintain the sulfur oxides, now that the latter have become combined with the slurry, entrained with the flue gas. Consequently, the sulfur oxide bearing slurry falls out of the gas stream and drops down into a suitable receptacle that has been provided for this purpose, and from whence the sulfur oxide bearing slurry can be recovered.

Although spray towers have proven to be effective devices insofar as concerns the removal of sulfur oxides from the flue gas, there has nevertheless still existed a need for the flue gas to undergo further treatment in order to effect the removal of particulate matter therefrom. One form of device that has been utilized by the prior art for this purpose is that known as a rod scrubber. In essence, as its name implies, a rod scrubber consists of a multiplicity of rods preferably arranged in a plurality of layers thereof that are suitably disposed so as to lie in the flow path of the flue gas. Normally, spray means operable for discharging a water-based slurry therefrom also form a component part of the rod scrubber. In this case, however, unlike that of the spray tower, the nozzles of the spray means through which the slurry is discharged are located upstream of the rod scrubber and are designed to discharge the slurry in the same direction as that in which the flue gas is flowing. Reference may be had to U.S. Patent No. 3,730,499— Jonakin for a teaching of the nature of the construction and the mode of operation of a prior art form of rod scrubber. In the aforesaid Jonakin patent, the rod scrubber is illustrated being employed in association with a device referred to as a demister. Basically, the function of a demister is to effect the separation of most of the fine water droplets that may remain entrained in the gas stream after the flue gas leaves the rod scrubber. Completely lacking from US—A—3730499, however, is any suggestion of the desirability, i.e., of the advantages that would flow from employing a spray tower upstream of the rod scrubber and demister means depicted therein. Namely, US—A—3730499 fails to teach the desirability of combining in a single apparatus spray tower means with rod scrubber means for purposes of effecting the sequential removal of sulfur compounds and particulate matter from untreated flue gas for purposes of enabling the latter to meet stringent emission standards such as the New Source Performance Standards proposed by the United States Environmental Protection Agency, which would limit the emissions from a utility power boiler to 0.03#/MMBTU.

Notwithstanding the employment by the prior art of devices such as spray towers to effect the removal of sulfur compounds from the flue gas, rod scrubbers to effect the removal of particulate matter from the flue gas, and demisters to effect the separation of time water droplets from the gas stream, it has nevertheless been found that the flue gas that is being exhausted from the stack to the atmosphere still contains a significant amount of carryover. To date, however, the elimination of this carryover has largely been viewed as being simply an objective to be attained possibly at some future date. A change in this attitude is now being forced through by the fact that more stringent air-emission standards are currently being adopted by the federal government. Namely, although prior art flue gas treatment devices may have been effective heretofore to meet the air-emission standards then prevailing, these devices it is feared may no longer be adequate to comply with the new, and more restrictive standards that are being adopted at all levels of government.

It is important that note be taken herein of the fact that the flue gases from the time that they are produced during the combustion process until they are released to the atmosphere from the stack are made to flow through substantially a closed path. The significance of this is that consideration must therefore be given to the fact that the insertion into this closed path of any form of flue gas treatment device such as a spray tower and/or a rod scrubber and/or a demister for air quality control purposes must be effected in such a manner as to not adversely affect the accomplishment of the primary function of the power generation unit, which is being provided with the air quality control system; namely, that of steam generation. In this regard, and by way of illustration, one alternative that might be viewed as a possible solution to the problem, which has been mentioned above, of flue gas carryover would involve the employment of a series of demisters. However, although theoretically this might appear to be a viable solution to the aforesaid carryover problem, it would be unacceptable for practical reasons. Namely, one effect that adding one or more demisters, or some other functionally similar devices in the system would have would be that of increasing the pressure drop that occurs across the air quality control system. This in turn would generate a need to provide the power generation unit with induced draft fans of a capacity larger than would be otherwise required in order to insure that these fans would have sufficient capability to perform their intended function as regards influencing the operation of the power generation unit. The need to employ larger size induced draft fans simply to compensate for an increased pressure drop occasioned by the inclusion of additional flue gas treatment devices in the air quality control system would add measurably to the overall cost of the power generation unit. Thus, this alternative, which appears feasible from a theoretical standpoint, would be rejected because of cost considerations, if for no other reason, in favor of some other less costly alternative solution to the carryover problem. In summary, therefore, there is a need when making structural changes in air quality control systems of known construction to consider what impact such changes may have on the performance of the power generation unit, with which the subject air quality control system is intended to be cooperatively associated.

Finally, it is widely known that equipping a power generation unit with some form of air quality control system does not advantageously affect the performance of the power generation unit as measured by the ability of the latter to generate steam in an effective and efficient manner. On the other hand, it is also generally acknowledged that equipping a power generation unit with an air quality control system does add measurably to the overall cost of the unit. Furthermore, as a general rule, the more stringent the air-emission standards become, the more costly it is to achieve compliance with the standards. Namely, the closer one is required to come towards the realization of complete elimination of all carryover from the flue gas, the more costly it becomes to successfully conclude this last step as compared, for instance, to the cost of successfully accomplishing the earlier goal of simply reducing the amount of flue gas carryover to some predetermined finite level. A need has thus been evidenced in the prior art to provide a new and improved method and apparatus for treating flue gases that are capable of being employed to effect a reduction in the amount of emissions that occur when flue gas is exhausted from a stack to the atmosphere, while concomitantly being capable of also providing measurable economies in the cost of providing a power generation unit with a flue gas treatment system, i.e., an air quality control system.

It is, therefore, an object of the present invention to provide a novel and improved method and apparatus for treating flue gases preparatory to exhaustion of the flue gas to the atmosphere.

It is another object of the present invention to provide such a method and apparatus for treating flue gases, which are operative to remove sulfur compounds from the flue gas.

It is still another object of the present invention to provide such a method and apparatus for treating flue gases, which are operable to effect the removal of particulate matter from the flue gas.

A further object of the present invention is to provide such a method and apparatus for treating flue gases, which are effective to cause the separation from the gas stream of fine water droplets that may be entrained in the flue gas.

A still further object of the present invention is to provide such a method and apparatus for treating flue gases, which are believed to be capable of meeting the Environmental Protection Agency's proposed New Source Performance Standards (NSPS) that requires utility power boilers to reduce particulate emission to 0.03#/MMBTU.

Yet another object of the present invention is to provide such a method and apparatus for treating flue gases that are capable of yielding economies in the cost of providing a power generation unit with a flue gas treatment device.

Yet still another object of the present invention is to provide such a method and apparatus for treating flue gases that are readily compatible for use with power generation units of conventional design without the necessity of effecting extensive modifications thereof.

Summary of the invention

In accordance with one aspect of the invention, there is provided a novel and improved method of treating the flue gas, which is produced as a by-product of the combustion process that occurs during the course of the operation of a fossil fuel-fired steam generation unit. The subject method encompasses the passage of the flue gas through an air quality control system and includes the steps of supplying the flue gas to the inlet located adjacent the base of a vertically standing air quality control system causing the flue gas to flow vertically in an upwardly direction, passing the flue gas while flowing in a vertically upwardly direction through a spray tower means to effect the removal of sulfur compounds therefrom, effecting upon the flue gas reaching the upper most portion of the air quality control system a first change in the direction of flow thereof whereupon the flue gas is made to flow horizontally across the top of the air quality control system, effecting a second change in the direction of flow of the flue gas whereupon the flue gas flows vertically in a downwardly direction, passing the flue gas while flowing in a vertically downwardly direction through a rod scrubber means to effect the removal of particulate matter therefrom, effecting as the flue gas approaches the base of the air quality control system a third change in the direction of flow thereof whereupon the flue gas is made to flow horizontally through a bulk entrainment separator and demister means to effect the separation of fine water droplets entrained therein, and thereafter exhausting the flue gas from the outlet of the air quality control system located adjacent the base thereof.

In accordance with another aspect of the present invention, there is provided a novel and improved apparatus for effecting the treatment of flue gas preparatory to the exhaustion there of from a stack to the atmosphere. The subject appartaus includes inlet means for receiving flue gas from a fossil fuel-fired steam generation unit. A vertically extending first conduit means has one end thereof connected fluidically to the inlet means, and is operative to confine the flow gas to flowing in a vertically upwardly direction. Intermediate the length thereof the first conduit means has a spray tower means mounted therein. The spray tower means is operative to effect the removal of sulfur compounds from the flue gas as the latter flows in a vertically upwardly direction through the first conduit means. A horizontally extending second conduit means has one end thereof connected fluidically to the other end of the first conduit means, and functions to confine the flue gas to flowing horizontally therethrough thereby effecting a first change in the direction of flow of the flue gas. The other end of the second conduit means is connected fluidically to one end of a vertically extending third conduit means. The third conduit means is operative, by confining the flue gas to flowing therethrough in a vertically downwardly direction, to effect a second change in the direction of flow of the flue gas. A rod scrubber means is mounted intermediate the length of the third conduit means, and functions to effect the removal of particular matter from the flue gas as the latter flows therethrough in a vertically downwardly direction. The other end of the third conduit means is connected fluidically to a horizontally mounted bulk entrainment separator and demister means through which the flue gas is made to pass. In flowing through the bulk entrainment separator and demister means to effect the separation of fine water droplets entrained in the flue gas, a third change in the direction of flow of the flue gas is effected, i.e., the flue gas is now made to flow horizontally. The flue gas is thereafter exhausted from the apparatus through outlet means, the latter being suitably interconnected to a stack from which the flue gas is released to the atmosphere.

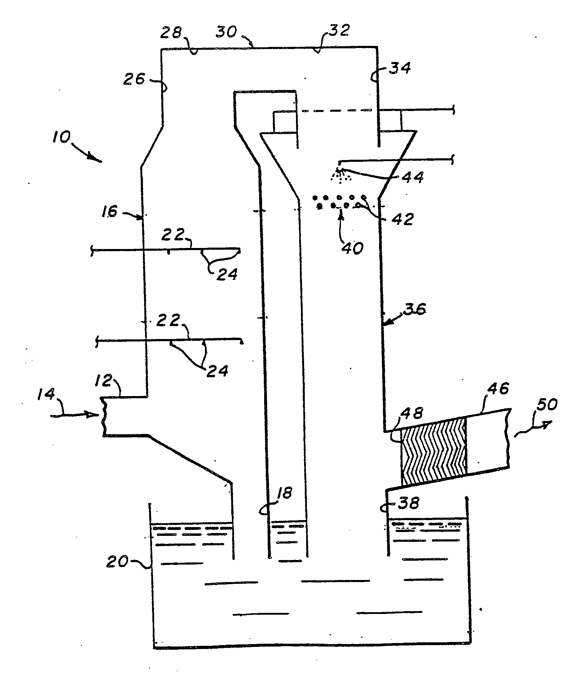

Brief description of the drawing

The figure schematically illustrates an apparatus for treating flue gases preparatory to the release thereof to the atmosphere, in accordance with the present invention.

Description of a preferred embodiment

Referring to the drawing, there is schematically illustrated therein an apparatus, generally designated by reference numeral 10, for treating flue gases in accordance with the present invention. In addition, the apparatus 10 also represents one form of means capable of use in accomplishing the practice of the method of the present invention of treating flue gases. The function of the apparatus 10 is in the nature of that of an air quality control system.

As depicted in the drawings, the apparatus 10 comprises a vertically standing unit, moreover, as seen therein, the apparatus 10 is provided adjacent its base with inlet means in the form of an inlet 12 through which the flue gas enters the apparatus 10. Although not shown it is to be understood that the inlet 12 is suitably connected in fluid flow relation with a fossil fuel-fired steam generating unit (not shown) that serves as the source of the flue gas, which is to be treated in the apparatus 10. The direction of flow of the flue gas to the inlet 12 is designated by the arrow that is denoted by the reference numeral 14 in the drawing.

From the inlet 12, the flue gas flows into a first conduit means 16, the latter preferably comprising a vertically extending duct-like structure that is suitably supported so as to have one end 18 thereof positioned in a reaction tank 20, the latter being provided for a purpose, which will be more fully described subsequently. The conduit means 16, is operative to effect the confinement of the flow of the flue gas to a vertically upwardly direction, after the flue gas passes through the inlet 12. Intermediate the length of the conduit means 16 there is suitably supported a spray tower means 22. Inasmuch as the method of supporting spray tower means in conduit means is well-known to those skilled in the art, it is not deemed necessary to set forth herein a detailed description thereof. Rather, should a teaching thereof be desired, reference may readily be had for this purpose to the prior art. Continuing with the description of the apparatus 10, as the flue gas is confined by the conduit means 16 to flowing in a vertically upwardly direction through the spray tower means 22, a spraying of the flue gas takes place. More specifically, a spray is discharged through a multiplicity of nozzles 24 into the path of flow of the flue gas. It should be noted here that the direction of discharge of the spray is counter to the direction of flow of the flue gas through the spray tower means 22. As depicted in the drawing, the spray tower means 22 preferably comprises at least two sets of multiple nozzles 24, with the two sets being spaced vertically one from another. Although not shown in the drawing, it is to be understood that each of the two sets of nozzles 24 is suitably connected in fluid flow relation with a suitable source (not shown) of the fluid, which is to be discharged through the nozzles 24.

The effect of spraying the flue gas in this manner is to produce a washing of the particle-laden flue gas to free the latter particularly of the sulfur compounds that are entrained therein. Commonly, the spray is in the form of a slurry that has a known affinity for sulfur oxides.

After being discharged in spray form from the nozzles 24, the slurry falls out of the gas stream of the flue gas, and drops into the reaction tank 20 bearing with it the sulfur oxides that have been drawn thereto. The sulfur compounds are carried along with the flue gas as the latter flows through the conduit means 16. However, once the sulfur compounds become combined with the slurry, they fall out of the gas stream.

The other end 26 of the conduit means 16 is connected in fluid flow relation with one end 28 of a horizontally extending second conduit means 30. Thus, the flue gas after having been passed through the spray tower means 22 to effect the elimination therefrom of sulfur compounds contained therein flows to the upper end 26 of the conduit means 16, whereupon it undergoes a first change in direction as it leaves the first conduit means 16 and enters the second conduit means 30. The flue gas now free of most of the sulfur compounds then flows in a generally horizontal direction, as viewed with reference to the drawing, until it reaches the other end 32 of the conduit means 30, whereupon the flue gas undergoes a second change in direction as it passes from the other end 32 of the conduit means 30 into the upper end 34 of a vertically extending third conduit means 36. As shown in the drawing, the end 34 of the conduit means 36 is suitably connected in fluid flow relation to the end 32 of the conduit means 30. Moreover, the conduit means 36 is suitably supported so as to have the other end 38 thereof positioned in the reaction tank 20 for a purpose yet to be described. Note should be taken here of the fact that the second conduit means 30 and the third conduit means 36 like the previously described first conduit means 16 preferably are each in the form of a duct-like structure that is operative to effect confinement of the flue gas to a pre-established flow path as it flows through the apparatus 10.

A rod scrubber means, generally designated by the reference numeral 40, is suitably mounted within the conduit means 36 intermediate the ends 34, 38 thereof. The rod scrubber means 40 may take the form of a rod scrubber means such as that which comprises the subject matter of U.S. Patent No. 3,730,499—Jonakin. Namely, the rod scrubber means 40 preferably includes a multiplicity of individual rods 42 arranged in a layer-like array. Cooperatively associated with the rods 42 is a spray means 44 that is operative to discharge a liquid into the path of flow of the flue gas as it flows through the conduit means 36. More specifically, the liquid, which is sprayed from the spray means 44 preferably consists of a slurry, and is discharged from the spray means 44 in the direction of flow of the flue gas through conduit means 36. The rod scrubber means 40 is operative to effect the removal of particulate matter from the flue gas as the latter flows through the former. The particulate matter, which is removed from the flue gas, falls out of the gas stream along with the slurry, by means of which the removal of the particulate matter has been effected, and drops into the reaction tank 20, from whence it may be subsequently removed in a manner wellknown to those skilled in the art.

Following its passage through the rod scrubber means 40, the flue gas, which has now been subjected to treatment to effect the removal therefrom of both sulfur compounds and particulate matter, continues to flow in a vertically downwardly direction substantially the remainder of the length of the third conduit means 36. At least part of this portion of the third conduit means 36 may be referred to as a dropout section inasmuch as the cross-sectional area there of although not shown in the drawing may be varied, as deemed desirable, i.e., increased so as to effect a decrease in the velocity of the gas stream flowing therethrough so as to thereby encourage droplets to agglomerate and fall out of the gas stream and enter the reaction tank 20. Upon reaching a point adjacent the lower end 38 of the conduit means 36, i.e., before reaching the reaction tank 20, the flue gas undergoes a third change in direction of flow. Namely, the flue gas leaves the conduit means 36 and enters a fourth conduit means 46, the latter being suitably supported so as to extend, as depicted in the drawing, in a substantially horizontal direction. Suitably mounted in the fourth conduit means 46 is a bulk entrainment separator and demister means 48. More specifically, the latter means 48 is suitably positioned in the conduit means 46 so as to be in the path of flow of the flue gas as the latter flows substantially horizontally through the conduit means 46. As such, the flue gas, being confined to flowing in the conduit means 46, is made to pass through the demister means 48, wherein a separation of fine water droplets that may still remain entrained in the flue gas is effected.

Generally speaking, the demister means 48 may consist of a multiplicity of baffle plates arranged in a zig-zag pattern. As the flue gas is made to flow through the tortuous path, continuously changing directions, established by the baffle plates most of the fine water droplets remaining in the gas stream are caused to be separated therefrom. Reference may be had to U.S. Patent No. 3,730,499—Jonakin for a teaching of a prior art form of demister means suitable for use in the conduit means 46. Upon leaving the demister means 48, the flue gas exits from the apparatus 10. To this end, the conduit means 46, although not shown in the drawing, is suitably connected in fluid flow circuit relation ultimately to means (not shown) such as a conventional exhaust stack from whence the flue gas finally achieves release to the atmosphere. The exit of the flue gas from the apparatus 10 is denoted in the drawing through the use of the arrow, which bears reference numeral 50.

One of the primary motivations that lead to the present invention was the fact that the Environmental Protection Agency (EPA) has proposed New Source Performance Standards (NSPS), which require utility power boilers, as has been mentioned previously hereinabove, to reduce particulate emissions to 0.03#/MMBTU. Inasmuch as it is known that some entrainment and carryover is inevitable from the currently available spray-tower type of air quality control systems and that carryover contributes to the outlet dust loading, it was deemed necessary that steps be initiated to effect the elimination of this carryover. The method and apparatus of the present invention meet this objective. More specifically, in accordance therewith the spray tower absorber is followed by a rod scrubber instead of preceded by it as is normally the case. The rod scrubber comprises a commercially proven contactor, which is capable of excellent particulate removal and as such is deemed to possess the capability of also effecting the removal of small diameter, entrained liquid droplets. Moreover, if deemed desirable, a dropout area can be provided downstream of the rod scrubber to promote agglomeration and to disengage droplets therefrom as the gas stream leaves the rod scrubber. Besides the capture of liquid carryover from the spray tower, the method and apparatus in accordance with the present invention offer other additional advantages. Namely, the spray tower can be designed for higher gas velocities since fine droplet carryover will be captured in the rod scrubber section. The significance of this is that higher velocities translate into smaller scrubbers and concomitantly lower costs. In addition, the spray tower is itself capable of particulate removal, thereby producing a decrease in the inlet loading to the rod scrubber. In turn, rod scrubber outlet dust concentrations may decrease as the inlet loading of the rod scrubber is decreased.

Furthermore, cost savings in terms of ductwork, etc. are obtainable through the use of the method and apparatus of the present invention. Namely, presently available rod scrubber-spray tower type flue gas treatment systems require the flue gas to be first ducted up to the top of the rod scrubber then down through the rod scrubber, then back up through the spray tower and demister, then down to the induced draft fans which form a component part of the steam generating unit, and then back up to the entrance of the exhaust stack. In contrast thereto, and as depicted in the drawing of the present application, the flue gas enters the bottom of the spray tower, flows upwardly, then down through the rod scrubber and horizontally through the demister. Although not depicted in the drawing, the flue gas then flows to the induced draft fan, and then finally up to the stack entrance. In essence therefore, with the method and apparatus of the present invention, one entire leg of ductwork is eliminated with accompanying measurable cost savings as contrasted to that required in the construction of prior art systems.

It can thus be seen that in accord with the method and apparatus of the present invention for effecting the treatment of flue gas, droplets carried over from the spray tower are designed to be collected by the rod scrubber. In this regard, it is known that the mean droplet size produced by spray tower nozzles is in the 1000—2000 micron range. Thus, even considering the fact that the smaller sized droplets are the ones likely to cause problems, the rod scrubber has proven effective at collecting particles down to a size of about 1 micron, and thus embodies the capability to collect these smaller sized droplets.

Additionally, by utilizing a device to efficiently collect the droplets downstream of the rod scrubber, high flue gas velocities through the scrubber are possible. Presently, the design of flue gas velocities is limited by the removal efficiency of the demisters. On the other hand, higher gas velocities offer at least two significant cost benefits. First, the cross-sectional area of the scrubber device, which is required to handle a given volumetric flow rate of flue gas is decreased. This, as noted above, enables smaller scrubbers to be employed, and thus reduces the capital cost of the equipment. Secondly, the overall gas phase mass transfer coefficient is increased at high gas velocities. This means that the slurry can be sprayed at lower rates thereby offering an associated reduction in the operating costs of the system.

In accordance with the method and apparatus of the present invention, there will still be some carryover from the rod scrubber. However, the actual emission rate therefrom will be lower than that from prior art systems for at least two principal reasons. First, the liquid-to-gas ratio employed in rod scrubbers is much lower than that employed in spray towers, i.e., 5—15 gal/mcf for rod scrubbers as opposed to 60—100 gal/mcf for spray towers. Thus, the low liquid-to-gas ratio in the rod scrubber is operative to minimize carryover. Secondly, the method and apparatus of the present invention possesses advantages in the form of centrifugal disengagement as the gas turns to enter the demister and also in the utilization of a horizontal demister. With respect to the latter, it is reasonable to expect that the droplet loading on the mist eliminating equipment will be diminished due to the fact that some fraction of the droplets will have sufficient momentum to disengage from the gas stream as the flue gas turns approximately 90°—110° to enter the demister. These droplets would then fall into the reaction tank. In addition, it has been shown that horizontal flow demisters that embody vertical baffles are more efficient than vertical flow demisters that embody horizontal baffles. Basically, this is because as the fine water droplets are separated from the gas stream in the vertical demister, they must fall back through the vertically flowing gas stream before dropping into the reaction tank, and thus are susceptible to becoming reentrained in the gas stream. On the other hand, the possibility of the occurrence of reentrainment of the droplets is virtually eliminated in the case of horizontally oriented demisters, i.e., those wherein the gas stream flow is horizontal. Finally, note is taken of the fact that some of the dust particles in the flue gas will be wetted and/or collected in the spray tower. This in turn produces a decrease in the inlet dust loading to the rod scrubber and additionally facilitates the collection of those particles that have been prewetted.

Thus, in accordance with the present invention, there has been provided a novel and improved method for treating flue gases preparatory to their release to the atmosphere. Also, the subject method and apparatus for treating flue gases of the present invention are operative to effect the removal of sulfur compounds from the flue gas. In addition, in accord with the present invention a method and apparatus for treating flue gases are provided that are operable to effect the removal of particulate matter from the flue gas. Further, the method and apparatus for treating flue gases of the present invention are effective to cause the separation from the gas stream of the fine water droplets that may be entrained in the flue gas. Additionally, in accordance with the present invention, a method and apparatus for treating flue gases have been provided that are believed to be capable of meeting the EPA's proposed New Source Performance Standards (NSPS) that requires utility power boilers to reduce particulate emissions to 0.03#/MMBTU. Moreover, the method and apparatus for treating flue gases of the present invention are capable of yielding economies in the cost of providing a power generation unit with a flue gas treatment system. Finally, in accord with the present invention, a method and apparatus for treating flue gases have been provided that are readily compatible for use with power generation units of conventional design without the need to make extensive modifications therein.

While only one embodiment of my invention has been shown, it will be appreciated that modifications thereof, some of which have been alluded to hereinabove as in the case of the matter of providing a dropout section, may readily be made thereto by those skilled in the art.

## Claims

1. An apparatus (10) for treating a flue gas containing sulfur compounds and particulate matter before this flue gas is released to the atmosphere to reduce the amount of particulate emissions being released therewith to the atmosphere comprising:

a) inlet means (12) connectable in fluid flow relation with a source of untreated flue gas containing sulfur compounds and particulate matter;

b) spray tower means (22) comprising a single vertical conduit (16) having a lower end (18) and an upper end (26) and at least one fluid spray means (24) mounted intermediate said lower end (18) and said upper end (26) of said single vertical conduit (16), said spray tower means (22) being connected adjacent said lower end (18) of said single vertical conduit (16) in fluid flow relation with said inlet means (12) to receive untreated flue gas therefrom said spray tower means (22) being operative to effect the removal of sulfur compounds from the untreated flue gas by spraying the untreated flue gas with water from said at least one fluid spray means (24) as the untreated flue gas flows once through said single vertical conduit (16) in a vertically upwards direction;

c) rod scrubber means (40) comprising a single vertical conduit (36) having a lower end (38) and an upper end (34), a sprinkler head (44) mounted adjacent said upper end (34) of said single vertical conduit (36) of said rod scrubber means (40) and a multiplicity of rods (42) supported within said single vertical conduit (36) of said rod scrubber means (40) so as to extend substantially transversely of the major axis thereof and so as to be positioned downstream of said sprinkler head (44) in juxtaposed relation thereto, said upper end (34) of said single vertical conduit (36) of said scrubber means (40) being connected in fluid flow relation with said upper end (26) of said single vertical conduit (16) of said spray tower means (22) so as to receive the flue gas from said spray tower means (22) directly following the treatment of the flue gas in said spray tower means (22) to remove sulfur compounds therefrom and without the flue gas undergoing any further treatment between said spray tower means (22) and said rob scrubber means (40), said rod scrubber means (40) being operative to effect the removal of particulate matter from the flue gas by spraying the flue gas with water from said sprinkler head (44) and by causing the flue gas to flow through said multiplicity of rods (42) as the flue gas flows once through said single vertical conduit (36) of said rod scrubber means (40) in a vertically downward direction;

d) a reaction tank (20) having said lower end (18) of said single vertical conduit (16) of said spray tower means (22) supported therein for establishing fluid flow communication between said spray tower means (22) and said reaction tank (20), said reaction tank (20) further having said lower end (38) of said single vertical conduit (36) of said rod scrubber means (40) supported therein for establishing fluid flow communication between said rod scrubber means (40) and said reaction tank (20), said reaction tank (20) being operative to receive from said vertical conduit (16) of said spray tower means (22) the sulfur compounds removed from said flue gas in said spray tower means (22) and to receive from said single vertical conduit (36) of said rod scrubber means (40) the particulate matter removed from said flue gas in said rod scrubber means (40); and

e) demister means (48) connected in fluid flow relation with said rod scrubber means (40) adjacent the lower end (38) of said single vertical conduit (36) of said rod scrubber means (40) so as to receive the flue gas from said rod scrubber means (40) after the treatment of the flue gas in said rod scrubber means (40) to remove particulate matter from the flue gas, said demister means (48) being operative to effect the separation of fine water droplets from the flue gas flowing through said demister means (48).

2. The apparatus (10) as set forth in Claim 1 further including first conduit means (30) extending substantially perpendicular to said single vertical conduit (16) of said spray tower means (22) and to said single vertical conduit (36) of said rod scrubber means (40), said first conduit means (30) having one end (28) thereof operatively connected to said upper end (26) of said single vertical conduit (16) of said spray tower means (22) and the other end (32) thereof operatively connected to said upper end (34) of said single vertical conduit (36) of said rod scrubber means (40) so as to establish a direct flow path between said spray tower means (22) and said rod scrubber means (40) for flue gas exiting from said spray tower means (22) and entering said rod scrubber means (40), said first conduit means (30) further being operative to effect a first change of direction of the flow of the flue gas entering therein from an upward vertical path to a horizontal path and thereafter a second change of direction of the flow of the flue gas exiting therefrom from a horizontal path to a downward vertical path.

3. In a system including spray tower means (22) comprising a single vertical conduit (16) having at least one fluid spray means (24) mounted therewithin intermediate the ends (18, 26) thereof, rod scrubber means (40) comprising a single vertical conduit (36) having a sprinkler head (44) mounted therewithin and a multiplicity of rods (42) supported therewithin so as to extend in transverse relation thereto and so as to be located in juxtaposed relation to the sprinkler head (44) on the downstream side thereof, and a demister means (48), the method of treating a flue gas containing sulfur compounds and particulate matter before this gas is released to the atmosphere to reduce the amount of particulate emissions being released therewith to the atmosphere comprising the steps of:

a) providing a supply of untreated flue gas containing sulfur compounds and particulate matter;

b) conducting the untreated flue gas to the spray tower means (22);

c) effecting the removal in the spray tower means (22) of sulfur compounds from the untreated flue gas with water as the untreated flue gas flows once through the single vertical conduit (16) of the spray tower means (22) in a vertically upwards direction;

d) conducting the flue gas directly from the spray tower means (22) to the rod scrubber means (40) following the treatment of the flue gas in the spray tower means (22) to effect the removal of sulfur compounds therefrom;

e) effecting the removal in the rod scrubber means (40) of particulate matter from the flue gas by spraying (44) the flue gas with water and by causing the flue gas to pass through the multiplicity of rods (42) as the flue gas flows once through the single vertical conduit (36) of the rod scrubber means (40) in a vertically downwards direction;

f) conducting the flue gas from the rod scrubber means (40) to the demister means (48) following the treatment of the flue gas in the rod scrubber means (40) to effect the removal of particulate matter therefrom;

g) effecting the separation in the demister means (48) of fine water droplets from the flue gas as the flue gas flows once through the demister means (48); and

h) conducting the flue gas from the demister means (48) following the treatment of the flue gas in the demister means (48) to effect the separation of fine water droplets therefrom.

**Patentansprüche**

1. Apparat (10) zur Behandlung von Schwefelverbindungen und Feststoffteilchen enthaltendem Rauchgas vor dessen Ablassen in die Atmosphäre, um dem Umfang der damit verbundenen Teilchenemission zu verringern, bestehend aus:

a) einer in Strömungsverbindung an eine Quelle unbehandelten, Schwefelverbindungen und Feststoffteilchen enthaltenden Rauchgases anschliessbaren Einlassvorrichtung (12),

b) einer Sprühwäschervorrichtung (22), die einen einzigen senkrechten Kanal (16) mit einem unteren (18) und oberen (26) Ende sowie mindestens eine Flüssigkeitssprühvorrichtung (24) umfasst, die zwischen diesem unteren (18) und oberen (26) Ende dieses einzigen. senkrechten Kanals (16) angebracht ist, wobei diese Sprühwäschervorrichtung (22) nahe jenem unteren Ende (18) dieses einzigen senkrechten Kanals (16) in Strömungsverbindung mit jener Einlassvorrichtung (12) zur Aufnahme unbehandelten Rauchgases daraus steht, wobei diese Sprühwäschervorrichtung (22) dazu dient, eine Entfernung der Schwefelverbindungen aus dem unbehandelten Rauchgas durch dessen Besprühung mit Wasser aus jener mindestens einen Flüssigkeitssprühvorrichtung (24) zu bewirken, während das unbehandelte Rauchgas einmal in der Richtung senkrecht nach oben durch diesen einzigen senkrechten Kanal (16) strömt,

c) einer Stabwäschervorrichtung (40), die aus einem einzigen senkrechten Kanal (36) mit einem unteren (38) und oberen (34) Ende, einer an diesem oberen Ende (34) dieses einzigen senkrechten Kanals (36) dieser Stabwäschervorrichtung (40) angebrachten Brause (44) sowie einer Vielzahl von Stäben (42) besteht, die in diesem einzigen senkrechten Kanal (36) dieser Stabwäschervorrichtung (40) so abgestützt sind, dass sie im wesentlichen quer zu deren Hauptachse verlaufen und Stromabwärts von dieser Brause (44) und diesbezüglich nebeneinander angeordnet, sind, wobei dieses obere Ende (34) dieses einzigen senkrechten Kanals (36) dieser Wäschervorrichtung (40) in Strömungsverbindung mit jenem oberen Ende (26) jenes einzigen senkrechten Kanals (16) jener Sprühwäschervorrichtung (22) steht, um daraus das Rauchgas direkt nach dessen Behandlung in dieser Sprühwäschervorrichtung (22) zur Entfernung von Schwefelverbindungen daraus aufzunehmen, ohne dass das Rauchgas zwischen jener Sprühwäschervorrichtung (22) und dieser Stabwäschervorrichtung (40) irgendeiner weiteren Behandlung unterzogen wird, wobei diese Stabwäschervorrichtung (40) dazu dient, die Entfernung der Feststoffteilchen aus dem Rauchgas dadurch zu bewirken, dass das Rauchgas mit Wasser aus dieser Brause (44) besprüht wird, während es beim einmaligen Durchströmen dieses einzigen senkrechten Kanals (36) dieser Stabwäschervorrichtung (40) in der Richtung senkrecht nach unten durch diese Vielzahl von Stäben (42) hindurch strömt,

d) einem Reaktionsbehälter (20), in dem dieses untere Ende (18) dieses einzigen senkrechten Kanals (16) dieser Sprühwäschervorrichtung (22) so abgestützt ist, dass eine Strömungsverbindung zwischen dieser Sprühwäschervorrichtung (22) und diesem Reaktionsbehälter (20) hergestellt wird, wobei ferner in diesem Reaktionsbehälter (20) dieses untere Ende (38) dieses einzigen senkrechten Kanals (36) dieser Stabwäschervorrichtung (40) so abgestützt ist, dass eine Strömungsverbindung zwischen dieser Stabwäschervorrichtung (40) und diesem Reaktionsbehälter (20) hergestellt wird, wobei dieser Reaktionsbehälter (20) dazu dient, aus diesem senkrechten Kanal (16) dieser Sprühwäschervorrichtung (22) die darin aus jenem Rauchgas entfernten Schwefelverbindungen sowie aus diesem einzigen senkrechten Kanal (36) dieser Stabwäschervorrichtung (40) die darin aus diesem Rauchgas entfernten Feststoff-teilchen zu empfangen, und

e) einer Entneblervorrichtung (48), die am unteren Ende (38) dieses einzigen senkrechten Kanals (36) dieser Stabwäschervorrichtung (40) mit diesem in Strömungsverbindung steht um das Rauchgas aus dieser Stabwäschervorrichtung (40) nach dessen Behandlung darin zur Entfernung von Feststoffteilchen aus dem Rauchgas zu empfangen, wobei diese Entneblervorrichtung (48) dazu dient, die Abtrennung feiner Wassertröpfchen aus dem Rauchgas zu bewirken, während dieses durch diese Entneblervorrichtung (48) strömt.

2. Apparat (10) nach Anspruch 1, welcher ferner eine erste Leitung (30) umfasst, die sich im wesentlichen normal zu jenem ersten senkrechten Kanal (16) jener Sprühwäschervorrichtung (22) und zu jenen einzigen senkrechten Kanal (36) jener Stabwäschervorrichtung (40) erstreckt, wobei diese erste Leitung (30) an ihrem einen Ende (28) mit jenem oberen Ende (26) jenes einzigen senkrechten Kanals (16) jener Sprühwäschervorrichtung (22) und an ihrem anderen Ende (32) mit jenem oberen Ende (34) jenes einzigen senkrechten Kanals (36) jener Stabwäschervorrichtung (40) in Wirkverbindung steht, um einem direkten Strömungsweg zwischen dieser Sprühwäschervorrichtung (22) und dieser Stabwäschervorrichtung (40) für das aus dieser Sprühwäschervorrichtung (22) austretende und in diese Stabwäschervorrichtung (40) eintretende Rauchgas herzustellen, wobei diese erste Leitung (30) ferner dazu dient, einen ersten Richtungswechsel der in sie eintretenden Rauchgasströmung von einem senkrecht aufwärts führenden Weg zu einem horizontalen Weg und danach einen zweiten Richtungswechsel der daraus austretenden Rauchgasströmung von einem horizontalen Weg zu einem senkrecht abwärts gerichteten Weg zu bewirken.

3. Verfahren zur Behandlung von Schwefelverbindungen und Feststoffteilchen enthaltendem Rauchgas vor dessen Ablassen in die Atmosphäre, um den Umfang der damit verbundenen Teilchenemission zu verringern, in einem System, welches eine Sprühwäschervorrichtung (22), die aus einem einzigen senkrechten Kanal (16) mit mindestens einer darin und zwischen dessen Enden (26) angebrachten Flüssigkeitssprühvorrichtung (24) besteht, eine Stabwäschervorrichtung (40), die aus einem einzigen senkrechten Kanal (36) mit darin angebrachter Brause (44) und einer Vielzahl von Stäben (42) besteht, die darin so abgestützt sind, dass sie quer dazu verlaufen und bezüglich der Brause (44) nebeneinander auf deren Abströmseite angeordnet sind, sowie eine Entneblervorrichtung (48) umfasst, welches Verfahren die folgenden Stufen einschliesst:

a) Anlieferung von unbehandeltem, Schwefelverbindungen und Feststoffteilchen enthaltenden Rauchgas,

b) Führung des unbehandelten Rauchgases zu der Sprühwäschervorrichtung (22),

c) Entfernung von Schwefelverbindungen aus dem unbehandelten Rauchgas mit Wasser in der Sprühwäschervorrichtung (22), während das unbehandelte Rauchgas einmal durch den einzigen senkrechten Kanal (16) der Sprühwäschervorrichtung (22) in der Richtung senkrecht nach oben strömt,

d) Führung des Rauchgases direkt aus der Sprühwäschervorrichtung (22) zu der Stabwäschervorrichtung (40) nach der Behandlung des Rauchgases in der Sprühwäschervorrichtung (22) zwecks Entfernung von Schwefelverbindungen daraus,

e) Entfernung von Feststoffteilchen aus dem Rauchgas in der Stabwäschervorrichtung (40), indem das Rauchgas mit Wasser besprüht (44) wird, während es beim einmaligen Durchströmen des einzigen senkrechten Kanals (36) der Stabwäschervorrichtung (40) in der Richtung senkrecht nach unten durch diese Vielzahl von Stäben (42) strömt,

f) Führung des Rauchgases von der Stabwäschervorrichtung (40) zu der Entneblervorrichtung (48) nach dessen Behandlung in der Stabwäschervorrichtung (40) zwecks Entfernung von Feststoffteilchen daraus,

g) Abtrennung von feinen Wassertröpfchen aus dem Rauchgas in der Entneblervorrichtung (48), während das Rauchgas einmal durch diese Entneblervorrichtung (48) strömt, und

h) Weiterleitung des Rauchgases aus der Entneblervorrichtung (48) nach dessen Behandlung in der Entneblervorrichtung (48) zwecks Abtrennung feiner Wassertröpfchen daraus.

**Revendications**

1. Appareil (10) pour traiter des fumées contenant des composés du soufre et des matières particulaires avant de les lâcher dans l'atmosphère de manière à réduire la quantité de matières particulaires s'échappant avec les fumées dans l'atmosphère, caractérisé en ce qu'il comprend:

a) une entrée (12) pouvant être raccordée d'une manière permettant un écoulement de fluide à une source de fumées non traitées contenant des composés du soufre et des manières particulaires;

b) une tour à pulvérisation (22) comprenant un conduit vertical unique (16) comportant une extrémité inférieure (18) et une extrémité supérieure (26) et au moins un dispositif de pulvérisation (24) monté entre l'extrémité inférieure (18) et l'extrémité supérieure (26) du conduit vertical (16), la tour à pulvérisation (22) étant raccordée, près de l'extrémité inférieure (18) du dit conduit vertical (16), d'une manière permettant un écoulement de fluide, à l'entrée (12) pour en recevoir des fumées non traitées, la tour à pulvérisation (22) étant à même d'extraire des composés du soufre des fumées non traitées par arrosage de ces fumées non traitées au moyen d'eau provenant du ou des dispositifs de pulvérisation (24) à mesure que les fumées non traitées s'écoulent en un seul passage dans le conduit vertical (16) dans un sens orienté verticalement vers le haut;

c) un laveur à barres (40) comprenant un conduit vertical unique (36) comportant une extrémité inférieure (38) et une extrémité supérieure (34), une pomme d'arrosage (44) montée près de l'extrémité supérieure (34) du dit conduit vertical (36) du laveur à barres (40) et un grand nombre de barres (42) montées dans le conduit vertical (36) du laveur (40) de manière à s'étendre en substance en travers du grand axe de ce laveur et de manière à être positionnées en aval de la pomme d'arrosage (44) en juxtaposition avec celle-ci, l'extrémité supérieure (34) du conduit vertical (36) du laveur (40) étant raccordée d'une manière permettant un écoulement de fluide à l'extrémité supérieure (26) du conduit vertical (16) de la tour à pulvérisation (22) de manière à recevoir les fumées de cette tour à pulvérisation (22) immédiatement après le traitement des fumées dans la tour (22) pour en éliminer les composés du soufre et sans que les fumées subissent un quelconque autre traitement entre la tour à pulvérisation (22) et le laveur à barres (40), ce laveur à barres (40) étant à même d'assurer l'élimination des matières particulaires des fumées par arrosage des fumées au moyen d'eau provenant de la pomme d'arrosage (44) et par passage des fumées à travers les nombreuses barres (42), les fumées s'écoulant en un seul passage dans le conduit vertical (36) du laveur à barres (40) dans un sens vertical dirigé vers le bas;

d) une cuve de réaction (20) dans laquelle l'extrémité inférieure (18) du conduit vertical unique (16) de la tour à pulvérisation (22) est supportée pour établir une communication permettant un écoulement de fluide entre la tour à pulvérisation (22) et la cuve de réaction (20), la cuve de réaction (20) contenant également l'extrémité inférieure (38) du conduit vertical unique (36) du laveur à barres (40) qui y est supporté pour établir une communication permettant un écoulement de fluide entre la tour de pulvérisation (22) et la cuve de réaction (20), la cuve de réaction (20) étant à même de recevoir du conduit vertical (16) de la tour à pulvérisation (22) les composés du soufre éliminés des fumées dans la tour à pulvérisation (22) et du conduit vertical unique (36) du laveur à barres (40) les matières particulaires extraites des fumées dans le laveur à barres (40), et

(e) un dispositif d'élimination du brouillard (40) raccordé d'une manière permettant un écoulement de fluide au laveur à barres (40) près de l'extrémité inférieure (38) du conduit vertical unique (36) du laveur à barres (40) de manière à recevoir les fumées du laveur à barres (40) après leur traitement dans le laveur à barres (40) visant à an éliminer les matières particulatires, le dispositif (48) d'élimination du brouillard pouvant intervenir pour séparer de fines gouttelettes d'eau des fumées qui le traversent.

2. Appareil (10) suivant la revendication 1, comprenant, en outre, un premier conduit (30) qui s'étend en substance perpendiculairement au conduit vertical unique (16) de la tour à pulvérisation (22) et au conduit vertical unique (36) du laveur à barres (40), le premier conduit (30) étant raccordé par une extrémité (28) à l'extrémité supérieure (36) du conduit vertical unique (16) de la tour à pulvérisation (22) et son autre extrémité (32) étant raccordée à l'extrémité supérieure (34) du conduit vertical unique (36) du laveur à barres (40) de manière à établir un trajet d'écoulement direct entre la tour à pulvérisation (22) et le laveur à barres (40) pour permettre aux fumées de sortir de la tour à pulvérisation (22) et de pénétrer dans le laveur à barres (40), le premier conduit (30) pouvant, en outre, intervenir pour provoquer un premier changement de direction du flux de fumées pénétrant dans ce conduit, à partir d'un trajet vertical dirigé vers le haut vers un trajet horizontal, puis un second changement de direction du flux de fumées sortant de ce conduit à partir d'un trajet horizontal vers un trajet vertical dirigée vers le bas.

3. Dans un système comprenant une tour à pulvérisation (22) comportant un conduit vertical unique (16) contenant au moins un dispositif de pulvérisation de fluide (24) monté entre ses extrémités (18, 26), un laveur à barres (40) comprenant un conduit vertical unique (36) contenant une pomme d'arrosage (44) et un grand nombre de barres (42) supportées de manière à s'étendre transversalement au conduit et à être juxtaposées à la pomme d'arrosage (44) en aval de celle-ci, et un dispositif pour éliminer le brouillard (48), un procédé pour traiter des fumées contenant des composés du soufre et des matières particularies avant de lâcher ces fumées dans l'atmosphère, en vue de réduire la quantité de matières particulaires qui s'échappent avec les fumées dans l'atmosphère, caractérisé en ce que:

a) on fournit une alimentation de fumées non traitées contenant des composées du soufre et des matières particularies;

b) on amène les fumées non traitées à la tour à pulvérisation (22);

c) on extrait dans la tour à pulvérisation (22) les composés du soufre des fumées non traitées avec de l'eau tandis que les fumées non traitées s'écoulent en un seul passage dans le conduit vertical unique (16) de la tour à pulvérisation (22) dans une direction dirigée verticalement vers le haut;

d) on amène les fumées directement de la tour à pulvérisation (22) au laveur à barres (40) après avoir traité les fumées dans la tour à pulvérisation (22) pour en extraire les composés du soufre;

e) on élimine dans le laveur à barres (40) des matiéres particulaires des fumées par arrosage (44) des fumées au moyen d'eau et par passage des fumées à travers les nombreuses barres (42) tandis que ces fumées s'écoulent en un seul passage dans le conduit vertical (36) du laveur à barres (40) dans une direction dirigée verticalement vers le bas;

f) on amène les fumées du laveur à barres (40) au dispositif d'élimination du brouillard (48) après le traitement des fumées dans le laveur à barres (40) pour en extraire les matières particularies;

g) on sépare dans le dispositif d'élimination du brouillard (48) de fines gouttelettes d'eau des fumées, tandis que ces fumées s'écoulent en un seul passage à travers le dispositif d'élimination du brouillard (48), et

h) on évacue les fumées du dispositif d'élimination du brouillard (48) après le traitement des fumées dans ce dispositif (48) en vue de séparer de fines gouttelettes d'eau de ces fumées.

0 013 299